# EUROPÄISCHE PATENTANMELDUNG

(11) **EP 4 686 053 A1**
(43) Veröffentlichungstag der Anmeldung: **28.01.2026**
(21) Anmeldenummer: 25191690.4
(22) Anmeldetag: 24.07.2025
(51) Int. Cl.: H02K 15/50

(54) **LAGERTAUSCH BEI EINER ELEKTRISCHEN MASCHINE, INSBESONDERE EINEM ELEKTROMOTOR**

(30) Priorität: 26.07.2024 DE 102024121414
(71) Anmelder: Zollern GmbH & Co. KG, 72517 Sigmaringen-Laucherthal (DE)
(72) Erfinder: Berger, Peter, 88518 Herbertingen (DE)
(74) Vertreter: SSM Sandmair

(57) **Zusammenfassung**

Elektrische Maschine (1), die Folgendes umfasst: ein Gehäuse (10) und einen Stator (14), und einen Rotor (20) mit einer Rotorwelle (21), die über Drehlager (31, 41) um eine Drehachse (D) drehbar an dem Gehäuse (10) gelagert ist, wobei zumindest eines der Drehlager (31; 41) lösbar an dem Gehäuse (10) befestigt ist und mit einer Bewegung entlang der Drehachse (D) von dem Gehäuse (10) und der Rotorwelle (21) entfernbar ist. Die elektrische Maschine (1) weist ferner eine Halteeinrichtung (5; 5') auf, die verhindert, dass der Rotor (20) in Berührung mit dem Stator (14) gerät, wenn das Drehlager (31; 41) von dem Gehäuse (10) entfernt wird oder ist.

## Beschreibung

Die Erfindung betrifft eine elektrische Maschine, insbesondere einen Elektromotor, bei dem ein Drehlager, über das eine Rotorwelle drehbar an einem Gehäuse der Maschine gelagert ist, austauschbar ist. Bei dem Elektromotor handelt es sich vorzugsweise um einen sogenannten Torque-Motor. Die Erfindung betrifft ferner ein Verfahren zum Austausch eines Drehlagers einer solchen elektrischen Maschine.

Torque-Motoren weisen sehr hohe Drehmomente bei relativ kleinen Drehzahlen auf. Sie werden oft als Direktantrieb, das heißt ohne zwischengeschaltetes Getriebe verwendet.

Insbesondere Torque-Motoren haben eine lange Lebensdauer. Dennoch kann es vorkommen, dass ein oder mehrere Lager, mit denen eine Rotorwelle drehbar, insbesondere an einem Gehäuse der elektrischen Maschine, gelagert ist, getauscht werden sollen.

Der Erfindung liegt die Aufgabe zugrunde, eine elektrische Maschine anzugeben, bei der ein Lagertausch auf eine einfache Weise möglich ist. Ferner ist es eine Aufgabe, ein Verfahren zum Austausch eines Lagers einer elektrischen Maschine anzugeben. Die Aufgaben werden mit den Ansprüchen 1 und 10 gelöst. Vorteilhafte Weiterentwicklungen ergeben sich aus den abhängigen Ansprüchen, der Beschreibung und den Figuren.

Die Erfindung geht von einer elektrischen Maschine, wie zum Beispiel einem Elektromotor, der beispielsweise als Torque-Motor ausgebildet sein kann, aus. Die elektrische Maschine umfasst ein Gehäuse und einen Stator, der in Bezug auf das Gehäuse feststeht oder an dem Gehäuse befestigt ist. Ferner umfasst die elektrische Maschine einen Rotor mit einer Rotorwelle, die über mindestens ein Drehlager, wie zum Beispiel ein erstes Drehlager und ein zweites Drehlager, um eine Drehachse drehbar an dem Gehäuse gelagert ist. Der Stator kann mehrere Wicklungen oder Spulen aus einem elektrischen Leiter aufweisen, wobei durch die Wicklungen oder Spulen fließenden elektrischen Strom ein rotierendes Magnetfeld erzeugt wird, welches den Rotor in eine Drehbewegung versetzt. Der Stator kann außerdem Elektroblech(e) beispielsweise aus einem Eisenmaterial aufweisen. Der Rotor kann beispielsweise eine Vielzahl Permanentmagnete aufweisen, welche durch das rotierende Magnetfeld des Stators um die Drehachse in Drehung versetzt werden und dabei den Rotor entsprechend mitnehmen.

Zwischen dem Rotor, insbesondere den Permanentmagneten, und dem Stator ist ein umlaufender Luftspalt gebildet, der eine möglichst geringe Spaltbreite aufweist, aber dennoch so groß bemessen ist, dass sich der Rotor und der Stator nicht berühren.

Durch das oder die Drehlager, über die sich die Rotorwelle an dem Gehäuse drehbar abstützt, wird sichergestellt, dass der Rotor und der Stator einander nicht berühren oder/und der Luftspalt aufrechterhalten bleibt. Wenn jedoch das Drehlager oder eines der Drehlager ausgetauscht wird, entfällt die Abstützfunktion zumindest auf einer Seite der Rotorwelle, wodurch die Rotorwelle in Bezug auf die Drehachse verkippen könnte und die Permanentmagnete an den Stator oder dessen Elektroblech angezogen werden, wodurch der Stator und/oder der Rotor beschädigt werden könnten. Außerdem bereitet es Schwierigkeiten, aufgrund der hohen magnetischen Kräfte einen am Stator anliegenden Rotor vom Stator beschädigungsfrei zu lösen.

Die elektrische Maschine ist so ausgebildet, dass das oder zumindest eines der Drehlager austauschbar ist, insbesondere ohne die komplette elektrische Maschine auseinanderbauen zu müssen. Dies hat den Vorteil, dass die elektrische Maschine im Feld, das heißt vor Ort, mit einem oder mehreren Austausch-Drehlagern instandgesetzt werden kann. Dadurch können Betriebsunterbrechungen einer Maschine, in der die elektrische Maschine eingebaut ist, geringgehalten werden. Das oder zumindest eines oder beide der Drehlager können lösbar an dem Gehäuse befestigt sein und mit einer Bewegung entlang der Drehachse von dem Gehäuse und beispielsweise auch der Rotorwelle entfernt oder abgezogen werden. Das oder die Drehlager können jeweils an einer Stirnwand des Gehäuses angeordnet sein, über die sich die Rotorwelle an dem Gehäuse oder der Stirnwand des Gehäuses abstützt.

Die elektrische Maschine weist eine Halteeinrichtung auf, die verhindert, dass der Rotor in Berührung mit dem Stator gerät, wenn das Drehlager von dem Gehäuse entfernt wird oder ist. Durch die Halteeinrichtung kann das Drehlager entfernt oder ausgewechselt werden, wobei die radiale Abstützfunktion des Drehlagers von der Halteeinrichtung übernommen wird, insbesondere so lange, bis das Drehlager gegen ein neues Drehlager ausgetauscht ist. Dadurch, dass die Halteeinrichtung ein Verkippen des Rotors oder der Rotorwelle in Bezug auf die Drehachse verhindert, wenn das Drehlager von dem Gehäuse entfernt ist oder wird, können die Nachteile, die durch eine Berührung des Rotors mit dem Stator einhergehen, vermieden werden.

Die Halteeinrichtung oder ein Teil der Halteeinrichtung kann von der elektrischen Maschine entfernt sein, wenn der Rotor über die Drehlager um die Drehachse drehbar an dem Gehäuse gelagert ist. Ein anderer Teil der Halteeinrichtung kann währenddessen oder permanent an der elektrischen Maschine, beispielsweise an deren Gehäuse angebracht sein. Die Halteeinrichtung oder ein Teil der Halteeinrichtung kann beispielsweise dann oder nur dann an der elektrischen Maschine angebracht werden, wenn das oder eines der Drehlager von dem Gehäuse entfernt oder ausgetauscht werden soll.

Die Halteeinrichtung kann mindestens einen Haltekörper aufweisen, welcher aus einer Position, in der er außer Eingriff mit dem Rotor ist, in eine Eingriffsposition bewegbar ist oder bringbar ist, in der er in einem derartigen Eingriff mit dem Rotor ist, dass er ein Verkippen der Rotorwelle in Bezug auf die Drehachse verhindert. Dadurch wird verhindert, dass der Rotor in Berührung mit dem Stator gerät, wenn das Drehlager von dem Gehäuse entfernt wird oder ist. Beispielsweise kann der Haltekörper in einer Position, in der er außer Eingriff mit dem Rotor ist, von der elektrischen Maschine entfernt sein oder permanent an der elektrischen Maschine angebracht sein. Wenn der mindestens eine Haltekörper von der elektrischen Maschine entfernt ist, wird er bei Bedarf, das heißt, wenn das Drehlager von dem Gehäuse entfernt werden soll, an der elektrischen Maschine angebracht. Der Rotor kann sich über den mindestens einen Haltekörper an dem Gehäuse, insbesondere einer Stirnwand des Gehäuses abstützen, wodurch dieser die radiale Abstützfunktion des Drehlagers, beispielsweise während des Lagertauschs, übernimmt und ein Verkippen der Rotorwelle in Bezug auf die Drehachse verhindert.

Allgemein kann sich der Rotor, wenn eines der Drehlager ausgebaut ist, über das andere Drehlager einerseits und die Halteeinrichtung, insbesondere den mindestens einen Haltekörper andererseits an dem Gehäuse abstützen. Die Stirnwand kann beispielsweise eine oder mehrere Öffnungen aufweisen, über die der mindestens eine Haltekörper oder mehrere Haltekörper in das Gehäuse eingeführt, beispielsweise eingesteckt oder eingeschraubt werden können, um in die Eingriffsposition mit dem Rotor gebracht zu werden. Die mindestens eine Öffnung kann, wenn der mindestens eine Haltekörper nicht an der elektrischen Maschine angebracht ist, mittels einer Abdeckung, wie zum Beispiel einer Schraube oder einem Deckel abgedeckt werden.

Beispielsweise können mehrere Haltekörper über den Umfang des Rotors verteilt angeordnet sein oder werden. Um ein Verkippen des Rotors möglichst zuverlässig zu verhindern, können beispielsweise mindestens drei Haltekörper über den Umfang des Rotors verteilt angeordnet sein. Dies kann insbesondere dann von Vorteil sein, wenn der mindestens eine Haltekörper bolzenförmig ausgestaltet oder ein Schraubenbolzen ist. Zumindest der Anzahl der Haltekörper entsprechend können vorgenannte Öffnungen vorgesehen sein.

Der mindestens eine Haltekörper kann von einer Stirnseite des Gehäuses, beispielsweise einer die Stirnseite des Gehäuses bildenden Stirnwand, in das Gehäuse einführbar sein, beispielsweise über die mindestens eine genannte Öffnung, um ihn in die Eingriffsposition zu bewegen. Der Rotor kann eine Haltefläche, die beispielsweise als Zentrierfläche ausgebildet ist, aufweisen, die an dem mindestens einen Haltekörper anliegt oder sich daran abstützt, wenn der mindestens eine Haltekörper in der Eingriffsposition ist. Beispielsweise kann die Haltefläche eine Innenumfangsfläche des Rotors sein. Die Innenumfangsfläche kann beispielsweise an einem Außenumfang oder einem Eingriffsabschnitt des mindestens einen Haltekörpers anliegen oder sich daran abstützen.

Die eine Stirnseite des Gehäuses bildende Stirnwand kann für den oder jeden der Haltekörper eine Führung der Halteeinrichtung bilden, über die sich der Haltekörper an der Stirnwand abstützt, wodurch beispielsweise ein Verkippen des länglichen Haltekörpers in Bezug auf die Einbringungsrichtung minimiert oder verhindert wird. Dadurch wird sichergestellt, dass ein Verkippen des Rotors oder der Rotorwelle in Bezug auf die Drehachse zumindest in einem solchen Maß verhindert wird, dass der Rotor in Berührung mit dem Stator gerät, wenn das Drehlager von dem Gehäuse entfernt wird oder ist.

An der Innenseite der eine Stirnseite bildenden Stirnwand des Gehäuses kann je Haltekörper mindestens ein Führungskörper der Halteeinrichtung angeordnet sein, welcher den Haltekörper führt. Dadurch kann ein Verkippen des Haltekörpers und somit ein Verkippen des Rotors oder der Rotorwelle noch besser verhindert werden. Gleichzeitig lässt sich die Stirnwand dünner ausführen. Der mindestens eine Führungskörper kann als Buchse ausgeführt sein. Der beispielsweise buchsenförmige Führungskörper kann an der Innenseite der Stirnwand angeschweißt oder anderweitig befestigt sein.

Der mindestens eine Führungskörper kann beispielsweise ein Innengewinde aufweisen, in das ein Außengewinde des Haltekörpers eingeschraubt ist. Durch Drehen des Haltekörpers in eine erste Drehrichtung kann dieser in die Eingriffsposition und durch Drehen in eine zweite, der ersten Drehrichtung entgegengesetzte Drehrichtung aus der Eingriffsposition bewegt oder geschraubt werden. Beispielsweise kann der Eingriffsabschnitt das Gewinde aufweisen. Beispielsweise kann sich die Haltefläche an dem Gewinde des Eingriffsabschnitts abstützen. Ein außerhalb der elektrischen Maschine angeordnetes Ende des Haltekörpers kann beispielsweise ein Mitnahmeprofil, wie zum Beispiel ein Außensechskantprofil oder ein Innensechskantprofil, aufweisen, um mit einem entsprechenden Werkzeug den Haltekörper in die Eingriffsposition oder aus der Eingriffsposition schrauben zu können.

Alternativ oder zusätzlich kann der Haltekörper einen zylindrischen Führungsschaft aufweisen, der von einer zylindrischen Innenumfangswand des mindestens einen Führungskörpers geführt wird. Durch eine entsprechende Passung, beispielsweise einer Spielpassung, zwischen dem zylindrischen Außenumfang des Führungsschafts und dem zylindrischen Innenumfang des mindestens einen Führungskörpers kann ein Verkippen des Haltekörpers vermieden oder zumindest sehr geringgehalten werden.

Beispielsweise können je Haltekörper ein erster Führungskörper, der beispielsweise als Buchse ausgestaltet ist, und ein zweiter Führungskörper, der beispielsweise aus Buchse ausgestaltet ist, vorgesehen sein. Der erste Führungskörper kann beispielsweise das Innengewinde und die zylindrische Innenumfangsfläche für den Führungsschaft aufweisen. In alternativen Ausführungsformen kann der erste Führungskörper ohne Innengewinde ausgeführt sein.

Der erste Führungskörper ist vorzugsweise an der zum Innenraum oder Rotor weisenden Stirnfläche der Stirnwand des Gehäuses angeordnet, beispielsweise angeschweißt. Der zweite Führungskörper kann beispielsweise eine in die Stirnwand eingesetzte, insbesondere eingepresste, Buchse sein, die ebenfalls eine an den zylindrischen Außenumfang des Führungsschafts angepasste Innenumfangsfläche aufweist. Die Innenumfangsfläche kann beispielsweise mittels einer Spielpassung mit der zylindrischen Außenumfangsfläche des Führungsschafts zusammenwirken. Durch die Ausführung mit einem ersten und zweiten Führungskörper kann eine noch breitere Abstützung des Haltekörpers bewirkt und ein Verkippen des Haltekörpers noch besser vermieden werden.

Bei Ausführungsformen des Haltekörpers ohne Gewinde, beispielsweise nur mit einem Führungsschaft, kann der Haltekörper in seine Längsrichtung in die Eingriffsposition und aus der Eingriffsposition verschoben werden. In Ausführungsformen des Haltekörpers mit einem Gewinde kann der Haltekörper in seiner Längsrichtung in die und aus der Eingriffsposition geschraubt werden. In Ausführungsformen des Haltekörpers mit einem Gewinde und einem zylindrischen Führungsschaft kann der Haltekörper in die und aus der Eingriffsposition geschraubt werden, wobei der zylindrische Führungsschaft ein verhältnismäßig großes Spiel des Gewindeeingriffs kompensiert und das Verkippen des Haltekörpers besonderes gut verhindert. In Ausführungformen des Haltekörpers mit einem Gewinde und einem Führungsschaft kann der Führungsschaft beispielsweise zwischen dem mit dem Gewinde versehenen Eingriffsabschnitt, der gleichzeitig ein Ende des Haltekörpers bildet, und dem Mitnahmeprofil, das beispielsweise das andere Ende des Haltekörpers bildet, angeordnet sein.

Das Drehlager, dessen Entfernen oder Auswechseln mit der hierin genannten Halteeinrichtung kompensiert werden soll, kann Teil einer Lagereinheit sein, welche beim Auswechseln oder Entfernen des Drehlagers ebenfalls vom Gehäuse und/oder der Rotorwelle entfernt wird. Die Lagereinheit, die das Drehlager und einen Lagersitzkörper, der das Drehlager an seinem Außenumfang umgibt, umfassen kann, kann an dem Gehäuse, insbesondere der Stirnwand des Gehäuses lösbar befestigt sein und von der Gehäusewand entfernbar sein. Der Lagersitzkörper kann mittels mindestens eines lösbaren Befestigungselements, wie zum Beispiel eines oder mehrerer Schraubenbolzen, an dem Gehäuse oder dessen Stirnwand befestigt sein. Beispielsweise kann der Lagersitzkörper eine Außenumfangsfläche aufweisen, die mit einer als Zentrierfläche ausgebildeten Innenumfangsfläche des Gehäuses, insbesondere der Stirnwand des Gehäuses zusammenpasst und den Lagersitzkörper und das Drehlager in Bezug auf die Drehachse zentriert, wenn die Lagereinheit an dem Gehäuse, insbesondere der Stirnwand des Gehäuses angeordnet oder befestigt ist. Der Lagersitzkörper kann zusammen mit dem Drehlager als Einheit mit einer Bewegung entlang der Drehachse der Rotorwelle von dem Gehäuse und/oder der Rotorwelle entfernt oder abgezogen werden.

Das Drehlager kann beispielsweise ein Gleitlager oder ein Wälzlager sein. Ein als Wälzlager ausgebildetes Drehlager kann einen Innenring, der auf einer Lagersitzfläche der Rotorwelle angeordnet ist, und einen Außenring aufweisen, der an einer Innenumfangsfläche des Lagersitzkörpers angeordnet ist. Zwischen dem Innenring und dem Außenring befinden sich Wälzkörper, wie zum Beispiel Rollen oder Kugeln. Das Drehlager, insbesondere der Außenring des Drehlagers kann beispielsweise mittels mindestens eines Lagerhaltekörpers, wie zum Beispiel eines ersten Lagerhaltekörpers und eines zweiten Lagerhaltekörpers, die von dem Lagersitzkörper gebildet werden oder an dem Lagersitzkörper befestigt sind, entlang der Drehachse des Drehlagers in Bezug auf den Lagersitzkörper axial befestigt sein. An dem ersten Lagerhaltekörper und/oder dem zweiten Lagerhaltekörper kann ein Sitz für eine Wellendichtung, insbesondere einen Radialwellendichtring, gebildet sein. Die mindestens eine Wellendichtung kann dichtend an einer Dichtfläche der Rotorwelle anliegen, wobei sich die Dichtfläche mit der Rotorwelle um die Drehachse in Bezug auf die Wellendichtung drehen kann. Durch die mindestens eine Wellendichtung wird das Drehlager zum Innenraum, in dem der Rotor angeordnet ist, und/oder zur Außenseite der elektrischen Maschine abgedichtet. Beispielsweise kann eine erste Wellendichtung, die am ersten Lagerhaltekörper sitzt, und eine zweite Wellendichtung, die am zweiten Lagerhaltekörper sitzt, vorgesehen sein, wobei das Drehlager zwischen der ersten Wellendichtung und der zweiten Wellendichtung angeordnet ist. Hierdurch kann das Drehlager sowohl zum Innenraum als auch zur Außenseite hin abgedichtet sein. Beispielsweise kann eine Schmiermittelzufuhr, wie zum Beispiel ein Schmiernippel vorgesehen sein, über den Schmierstoff, wie zum Beispiel Schmierfett, dem Drehlager zugeführt werden kann, wobei die beiden Wellendichtungen ein Austreten des Schmiermittels zum Innenraum hin und zur Außenseite hin verhindert.

Beispielsweise kann der Innenring des Drehlagers mittels eines Axialsicherungselements, welches an der Rotorwelle befestigt ist, gegen Verschiebung entlang der Drehachse in Bezug auf die Rotorwelle gesichert sein. Das Axialsicherungselement kann exemplarisch als Wellensicherungsring ausgeführt sein. Vor dem Entfernen der Lagereinheit oder des Drehlagers kann das Axialsicherungselement entfernt werden. Durch die Axialsicherung wird der Rotor oder die Rotorwelle in Bezug auf den Stator oder das Gehäuse in einer gewünschten Position entlang der Drehachse gehalten.

Der Rotor kann in Weiterbildungen Permanentmagnete, die stabförmig mit einer Stablängsrichtung ausgebildet sind, aufweisen. Mehrere Permanentmagnete können in Stablängsrichtung zur Bildung einer Reihe entlang der Drehachse aneinandergereiht angeordnet sein. Mehrere solcher Reihen können in Umfangsrichtung des Rotors abwechselnd gepolt angeordnet sein. Während eine Reihe in Umfangsrichtung eine Nord-Süd-Polung aufweist, weisen die angrenzenden Reihen jeweils eine Süd-Nord-Polung auf, usw. Der Rotor kann einen Magnetträger aufweisen, auf dem die Permanentmagnete sitzen und einen Außenumfang des Rotors bilden. Zwischen dem Außenumfang bzw. den Außenumfangsflächen der Permanentmagnete und dem Stator ist der oben genannte Luftspalt gebildet.

Die hierin beschriebene elektrische Maschine kann beispielsweise als Motor oder Torque-Motor ausgebildet sein. Durch die Auswechselbarkeit des Drehlagers im Feld oder vor Ort eignet sich die elektrische Maschine überall dort, wo Ausfallzeiten minimiert werden sollen. Besonders vorteilhaft lässt sich die hierin genannte elektrische Maschine als Antrieb einer Pellets-Presse oder Pelletieranlage, wie zum Beispiel zur Erzeugung von Holzpellets oder Futtermittelpellets verwenden. Bei Pelletieranlagen ist es oftmals gewünscht, dass diese rund um die Uhr in Betrieb sind. Da hohe Drehmomente und geringe Drehzahlen bei Pelletieranlagen von Vorteil sind, kann der Motor idealerweise als Torque-Motor ausgebildet sein. Solche Motoren haben eine entsprechende Größe, wodurch ein Lagertausch im Feld mit einer nur geringen Stillstandzeit gewünscht ist.

Die Erfindung betrifft ferner ein Verfahren zum Austausch eines Drehlagers einer elektrischen Maschine, insbesondere einer hierin beschriebenen elektrischen Maschine. Vor dem Entfernen des Drehlagers wird mindestens ein Haltekörper, beispielsweise mehrere Haltekörper, einer Halteeinrichtung in eine Eingriffsposition bewegt. In der Eingriffsposition befindet sich der mindestens eine Haltekörper in einem derartigen Eingriff mit dem Rotor der elektrischen Maschine, dass ein Verkippen einer Rotorwelle in Bezug auf eine Drehachse des Rotors oder der Rotorwelle verhindert wird. Dadurch wird verhindert, dass während des Lagertauschs oder dem Entfernen des Lagers der Rotor in Berührung mit dem Stator gerät. Nach dem Bewegen des mindestens einen Haltekörpers in die Eingriffsposition mit dem Rotor wird das Drehlager, über das die Rotorwelle an dem Gehäuse der elektrischen Maschine, insbesondere einer Stirnwand des Gehäuses, gelagert ist, entlang der Drehachse von dem Gehäuse, beispielsweise der Stirnwand, und der Rotorwelle entfernt oder abgezogen. Wie bereits aufgezeigt, verhindert der mindestens eine sich in der Eingriffsposition befindliche Haltekörper, dass der Rotor in Berührung mit dem Stator gerät, wenn das Drehlager von dem Gehäuse entfernt wird oder entfernt ist.

Nach dem Entfernen des Drehlagers, beispielsweise mitsamt der optionalen Lagereinheit, in der das Drehlager angeordnet ist, kann ein anderes, beispielsweise baugleiches Drehlager, entlang der Drehachse auf die Rotorwelle aufgeschoben und an dem Gehäuse montiert werden. Beispielsweise kann das Drehlager in die Lagereinheit des zuvor entfernten Drehlagers eingesetzt und zusammen mit der Lagereinheit auf die Rotorwelle aufgeschoben und am Gehäuse montiert werden. Alternativ kann auch eine neue Lagereinheit einschließlich Drehlager verwendet werden. Die Lagereinheit oder das Drehlager werden an dem Gehäuse, insbesondere der Stirnwand und/oder an der Rotorwelle befestigt. Über das neue Drehlager und die optionale Lagereinheit kann sich die Rotorwelle nun in Radialrichtung an dem Gehäuse, insbesondere der Stirnwand abstützen. Nachdem das Drehlager auf die Rotorwelle und an das Gehäuse montiert wurde, kann der mindestens eine Haltekörper aus der Eingriffsposition bewegt und optional von der elektrischen Maschine entfernt werden.

Beispielsweise kann der mindestens eine Haltekörper ein Schraubenbolzen sein, der durch Drehung in eine erste Drehrichtung in die Eingriffsposition bewegt wird und durch Drehung in eine zweite, der ersten Drehrichtung, entgegengesetzte Drehrichtung aus der Eingriffsposition bewegt wird.

Weiterbildungen des Verfahrens sind aus den im Zusammenhang mit der Vorrichtung beschriebenen Abläufen möglich.

Die Erfindung wurde anhand mehrerer Beispiele und Ausführungen beschrieben. Im Folgenden wird eine Ausführungsform anhand von Figuren beschrieben. Die dabei offenbarten Merkmale bilden den Gegenstand der Ansprüche einzeln und in jeglicher Merkmalskombination vorteilhaft weiter, ohne dadurch die Ansprüche einzuschränken. Es zeigen:
- Figur 1: eine Querschnittsansicht einer elektrischen Maschine entlang einer Drehachse,
- Figur 2: einen Teil der Ansicht aus Figur 1, wobei ein Drehlager entfernt wird,
- Figur 3: eine Querschnittsansicht der elektrischen Maschine senkrecht zur Drehachse und
- Figur 4: eine perspektivische Ansicht einer elektrischen Maschine.

Die in den Figuren gezeigte elektrische Maschine ist als Torque-Motor ausgebildet und erlaubt das Auswechseln eines ersten Drehlagers 31 und eines zweiten Drehlagers 41 unter Vermeidung, dass ein Rotor 20 in Berührung mit einem Stator 14 gerät, wenn eines der Drehlager 31, 41 von einem Gehäuse 10 entfernt wird oder ist.

Die elektrische Maschine 1 umfasst ein Gehäuse 10, welches einen Innenraum umgibt, in dem ein Rotor 20 um eine Drehachse D drehbar angeordnet ist. Das Gehäuse 10 weist eine Umfangswand 13 auf, welche den Rotor 20 um die Drehachse D umgibt und an deren Innenseite ein Stator 14 angeordnet ist, der mehrere Wicklungen 14a aufweist, die - von elektrischem Strom durchflossen - ein um die Drehachse D drehendes Magnetfeld erzeugen können. Auf der Außenseite weist die Umfangswand 13 mehrere Kühlkanäle auf, die sich in Umfangsrichtung erstrecken und die von einer ringförmigen Abdeckung, die sich über den Umfang um die Drehachse D erstreckt, abgedeckt werden.

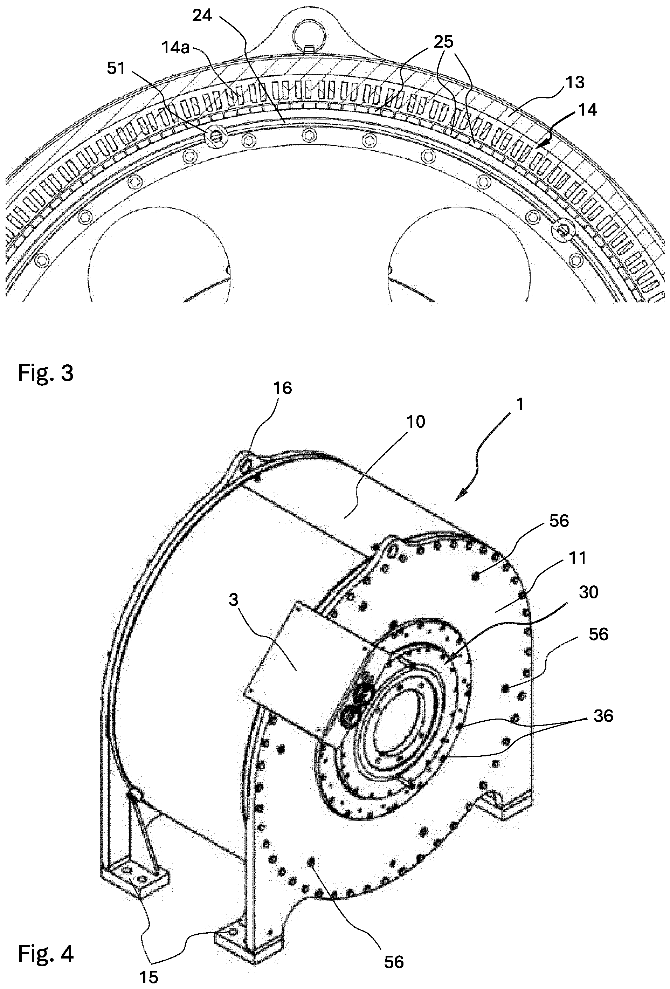

Die beiden Stirnseiten des Gehäuses 10 werden von einer ersten Stirnwand 11 und einer zweiten Stirnwand 12 gebildet, die den Innenraum seitlich einfassen und zwischen denen die Umfangswand 13 mit dem Stator 14 angeordnet ist. In dem gezeigten Beispiel bilden die erste und zweite Stirnwand 11, 12 Befestigungsflansche 15 (Figur 4), welche als Füße und zur Befestigung an beispielsweise einem Fundament einer Maschine, wie zum Beispiel einer Pelletieranlage dienen. Aufgrund der hohen Masse der elektrischen Maschine kann diese beispielsweise an den Stirnwänden 11, 12 gebildete Ösen 16 zur Anbringung eines Hebezeugs aufweisen.

Die elektrische Maschine 1 weist eine elektrische Anschlussdose 3 auf, in der die Wicklungen 14a an eine Spannungsversorgung angeklemmt werden können. Von der Anschlussdose 3 führen Verbindungsleitungen zwischen der ersten Stirnwand 11 und den Wicklungen 14a zu den Wicklungen 14a. Daher ist der Abstand zwischen den Wicklungen 14a und der ersten Stirnwand 11 größer als der Abstand zwischen den Wicklungen 14a und der zweiten Stirnwand 12.

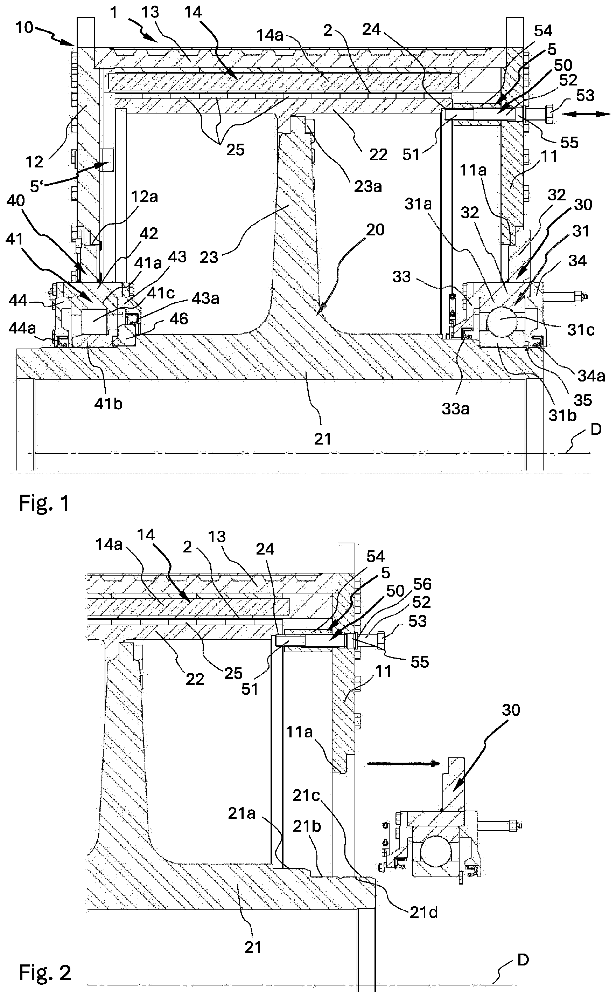

Der Rotor 20 weist eine, in diesem Beispiel als Hohlwelle ausgebildete, Rotorwelle 21 auf, die über das erste Drehlager 31 und das zweite Drehlager 41 um die Drehachse D drehbar an der ersten Stirnwand 11 und der zweiten Stirnwand 12 gelagert und abgestützt ist. Der Rotor 20 weist einen ringförmigen Magnetträger 22 auf, der die Rotorwelle 21 umgibt und über einen Verbindungssteg 23, der radial von der Rotorwelle 21 ragt, mit der Rotorwelle 21 verdrehfest verbunden ist. Der Verbindungssteg 23 ist mittels Schraubenbolzen 23a an dem Magnetträger 22 befestigt. Der Magnetträger 22 weist an seinem Außenumfang eine Vielzahl Permanentmagnete 25 auf, die in dem gezeigten Beispiel länglich ausgebildet sind und sich mit ihren Längsrichtungen parallel zur Drehachse D erstrecken. Die länglichen oder stabförmigen Permanentmagnete 25 sind in Stablängsrichtung zur Bildung einer Reihe aneinandergereiht angeordnet (siehe zum Beispiel Figur 1). Die Polung der Permanentmagnete 25 verläuft in Umfangsrichtung oder quer zu deren Stablängsrichtungen. Innerhalb einer Reihe sind die Magnete gleich gepolt. Über den Umfang des Rotors 20 sind mehrere solcher Reihen angeordnet (siehe Figur 3), wobei diese Reihen abwechselnd gepolt sind.

Die Permanentmagnete 25 bilden den Außenumfang des Rotors 20. Zwischen dem Außenumfang des Rotors 20 oder den Permanentmagneten 25 und dem Stator 14, der den Rotor 20 über seinen Außenumfang umgibt, ist ein Luftspalt gebildet, der möglichst gering ist, aber dennoch so groß bemessen ist, dass der Stator 14 und der Rotor 20, insbesondere dessen Magnete 25, einander nicht berühren.

Die elektrische Maschine 1 weist eine erste Lagereinheit 30 mit dem ersten Drehlager 31, über die sich die Rotorwelle 21 drehbar an der ersten Stirnwand 11 abstützt, und eine zweite Lagereinheit 40, mit dem zweiten Drehlager 41, über die sich die Rotorwelle 21 drehbar an der zweiten Stirnwand 12 abstützt, auf. Das erste Drehlager 31 und das zweite Drehlager 41 sind als Wälzlager ausgebildet. Das erste Drehlager 31 ist ein Kugellager, wobei das zweite Drehlager 41 ein Rollenlager ist. Die Drehlager 31, 41 weisen einen Innenring 31b, 41b auf, der auf einer Lagersitzfläche 21b (für das erste Drehlager 31 in Figur 2 gezeigt) auf der Rotorwelle 21 sitzt. Das erste Drehlager 31 ist als Festlager ausgeführt, wobei der Innenring 31b zwischen einer Stufe der Rotorwelle 21 und einem in einer Ringnut der Rotorwelle 21 angeordneten Axialsicherungselement 35 eingefasst ist. Das zweite Drehlager 41 kann als Loslager gebildet sein.

Das erste und zweite Drehlager 31, 41 weisen einen Außenring 31a, 41a auf, der mit seinem Außenumfang an einem Innenumfang eines Lagersitzkörpers 32, 42, der ersten Lagereinheit 30 oder der zweiten Lagereinheit 40 sitzt. Zwischen dem Außenring 31a, 41a und dem Innenring 31b, 41b weisen die Drehlager 31, 32 einen Wälzkörper 31c, 41c auf. Beim ersten Drehlager 31 ist der Wälzkörper 31c als Kugel ausgebildet. Beim zweiten Drehlager 41 ist der Wälzkörper 41c als Rolle ausgebildet.

Wie am besten aus Figur 1 erkennbar ist, weisen die Lagereinheiten 30, 40 einen ersten Lagerhaltekörper 33, 43 zum Innenraum hin und einen zweiten Lagerhaltekörper 34, 44 zur Außenseite hin auf. Der Außenring 31a, 41a ist zwischen dem ersten Lagerhaltekörper 33, 43 und dem zweiten Lagerhaltekörper 34, 44 entlang der Drehachse D eingefasst oder eingeklemmt. Die Lagerhaltekörper 33, 34, 43, 44 sind an dem Lagersitzkörper 32, 42 der ersten Lagereinheit 30 oder der zweiten Lagereinheit 40 gebildet oder befestigt, beispielsweise mittels Schraubenbolzen (Figuren 1 und 4). Die erste Stirnwand 11 weist eine als Innenumfangsfläche gebildete Zentrierfläche 11a auf. Die zweite Stirnwand 12 weist eine als Innenumfangsfläche gebildete Zentrierfläche 12a auf. Der erste Lagersitzkörper 32 weist eine Außenumfangsfläche auf, welche an der Zentrierfläche 11a anliegt und die erste Lagereinheit 30 in Bezug auf die Drehachse D zentriert. Gleichermaßen weist auch der zweite Lagersitzkörper 42 eine Außenumfangsfläche auf, die an der Zentrierfläche 12a anliegt und die zweite Lagereinheit 40 in Bezug auf die Drehachse D zentriert. Die erste Lagereinheit 30 und die zweite Lagereinheit 40 sind über Befestigungselemente 36, die beispielsweise als Schraubenbolzen ausgebildet sind, an der ersten Stirnwand 11 und der zweiten Stirnwand 12 lösbar befestigt.

Der erste Lagerhaltekörper 33, 43 hält eine erste Wellendichtung 33a, 43a. Die Wellendichtung 33a, 43a bildet mit einer Dichtfläche der Rotorwelle 21 einen Dichtspalt. Der Wellendichtring 43a bildet mit einer Dichtfläche eines Distanzrings 46 einen Dichtspalt. Der Distanzring 46 ist zwischen einer Stufe der Rotorwelle 21 und dem Innenring des Drehlagers 41 angeordnet und kann sich um die Drehachse D zusammen mit der Rotorwelle 21 drehen. Der zweite Lagerhaltekörper 34, 44 hält einen zweiten Wellendichtring 34a, 44a, der zusammen mit einer Dichtfläche 21 (in Figur 2 wird das erste Drehlager gezeigt) einen Dichtspalt bildet. Zwischen der ersten Wellendichtung 33a und der zweiten Wellendichtung 34a der ersten Lagereinheit 30 ist das erste Drehlager 31 angeordnet. Zwischen der ersten Wellendichtung 43a und der zweiten Wellendichtung 44a der zweiten Lagereinheit 40 ist das zweite Drehlager 41 angeordnet. Dadurch kann Schmiermittel an dem jeweiligen Drehlager 31, 41 gehalten werden. Optional kann ein Schmiernippel vorgesehen sein, über den die jeweiligen Drehlager 31, 41 mit Schmiermittel versorgbar sind (siehe Figur 1).

Die elektrische Maschine 1 weist eine Halteeinrichtung 5 auf, die verhindert, dass der Rotor 20, insbesondere die Permanentmagnete 25, in Berührung mit dem Stator 14 gerät, wenn das Drehlager 31, von dem Gehäuse 10 entfernt wird oder ist. Optional kann auch für den Austausch des anderen Drehlagers 41 eine solche Halteeinrichtung 5' vorgesehen sein (Figur 1). Die Halteeinrichtung 5' kann so aufgebaut sein, wie die Halteeinrichtung 5 mit der Ausnahme, dass sie an der zweiten Stirnwand 12 angeordnet und etwas kürzer ausgeführt ist.

Die Halteeinrichtung 5 (und optional 5') weist mindestens einen Haltekörper 50 auf, welcher in eine Eingriffsposition bewegbar ist, in der er mit einem derartigen Eingriff mit dem Rotor 20 ist, dass er ein Verkippen der Rotorwelle 21 in Bezug auf die Drehachse D verhindert. Die Halteeinrichtung 5 weist einen Haltekörper 50 auf, der in dem gezeigten Beispiel als Schraubenbolzen ausgeführt ist und an einem Ende einen Eingriffsabschnitt 51 und an seinem anderen Ende ein Mitnahmeprofil 53, welches in dem gezeigten Beispiel als Außensechskant ausgeführt ist, aufweist. Zwischen dem Eingriffsabschnitt 51 und dem Mitnahmeprofil 53 weist der Haltekörper 50 einen Führungsschaft 52 auf, der eine zylindrische Außenfläche aufweist, die mit einer zylindrischen Innenfläche eines ersten Führungskörpers 54 und eines zweiten Führungskörpers 55, die jeweils als Buchse ausgebildet sind, zusammenwirkt. Der Eingriffsabschnitt 51 weist ein Außengewinde auf, welches in ein Innengewinde des ersten Führungskörpers 54 eingreift. Durch Drehen des Haltekörpers 50 in eine erste Drehrichtung wird der Haltekörper 50 in eine Eingriffsposition und durch eine Drehung in die zweite Drehrichtung aus der Eingriffsposition bewegt oder geschraubt (siehe Doppelpfeil in Figur 1). Da der Gewindeeingriff ein verhältnismäßig großes radiales Spiel aufweisen kann, das zu einem Verkippen des Haltekörpers 50 in Bezug auf seine Längsrichtung und somit zu einem Verkippen des Rotors 20 in Bezug auf die Drehachse D führen kann, ist der Führungsschaft 52 an dem Innenumfang des ersten Führungskörpers 54 und dem Innenumfang des zweiten Führungskörpers 55 eng, wie zum Beispiel mittels einer Spielpassung, geführt.

Der erste Führungskörper 54 ist an der Innenseite, das heißt an der zum Rotor 20 weisenden Seite der ersten Stirnwand 11 (oder der zweiten Stirnwand 12) befestigt, wie zum Beispiel angeschweißt. Der zweite Führungskörper 55 ist beispielsweise als Buchse ausgebildet und in eine Bohrung der ersten Stirnwand 11 (oder der zweiten Stirnwand 12) eingepresst. Alternativ kann - in Ausführungen ohne zweiten Führungskörper 55 - die erste Stirnwand 11 die Aufgabe des zweiten Führungskörpers 55 übernehmen, nämlich den Führungsschaft 52 zu führen, wobei die Stirnwand 11 hierfür eine Bohrung mit einem Innenumfang, an der der Führungsschaft 52 geführt ist, aufweist.

Der Rotor 20, beispielsweise der Magnetträger 22, weist eine Haltefläche 24 auf, die als Zentrierfläche dient. Die Haltefläche 24 ist in dem gezeigten Beispiel eine Innenumfangsfläche, kann jedoch auch eine Außenumfangsfläche oder eine Nut sein. In der in Figur 1 gezeigten Eingriffsposition des Haltekörpers 50 befindet sich der Haltekörper 50, beispielsweise der Eingriffsabschnitt 51, in einem Eingriff mit der Haltefläche 24. Die Haltefläche 24 kann an dem Eingriffsabschnitt 51 anliegen, wodurch ein Verkippen der Rotorwelle 21 in Bezug auf die Drehachse D zumindest in eine Richtung verhindert wird. In dem gezeigten Beispiel sind mehrere, wie zum Beispiel mindestens drei, über den Umfang verteilte Halteeinrichtungen 5 vorgesehen, deren Öffnungen 56, in die jeweils ein Haltekörper 50 eingesteckt werden kann, in der Figur 4 gezeigt werden.

Vor einem Entfernen des ersten Drehlagers 31, beispielsweise zum Austausch des ersten Drehlagers 31, werden mehrere Haltekörper 50 von der Stirnwand 11 über die Öffnungen 56 in das Gehäuse 10 eingeführt und durch Drehen in eine erste Drehrichtung in die Eingriffsposition geschraubt. Anschließend werden die lösbaren Befestigungselemente, mit denen die erste Lagereinheit 30 an der ersten Stirnwand 11 befestigt ist, gelöst. Falls, wie in Figur 1 gezeigt, optional ein Axialsicherungselement 35 vorgesehen ist, wird dieses ebenfalls entfernt. Anschließend wird die Lagereinheit 30 zusammen mit dem ersten Drehlager 31 von der ersten Stirnwand 11 und der Rotorwelle 21 entlang der Drehachse D abgezogen. Durch die in ihren Eingriffspositionen befindlichen Haltekörper 50 wird ein Verkippen der Rotorwelle 21 in Bezug auf die Drehachse D verhindert, sodass auch verhindert wird, dass der Rotor 20 in Berührung mit dem Stator 14 gerät, da nun die Abstützfunktion des ersten Drehlagers 31 entfällt. Das andere Drehlager, wie zum Beispiel das Drehlager 41 bleibt währenddessen im eingebauten Zustand. Optional kann es nach dem Tausch des ersten Drehlagers 31 getauscht werden, wobei so verfahren wird, wie beim ersten Drehlager 31, allerdings mittels der Halteeinrichtung 5'.

Alternativ können Haltekörper 50 von der anderen Seite her über die Halteeinrichtung 5' in eine Eingriffsposition mit der auf der linken Seite in Figur 1 gezeigten Haltefläche des Magnetträgers 22 bewegt werden. Somit wäre ein gleichzeitiges Entfernen der ersten Lagereinheit 30 und der zweiten Lagereinheit 40 möglich.

Nach dem Austausch des ersten Drehlagers 31 kann dieses zusammen mit der Lagereinheit 30 entlang der Drehachse D auf die Rotorwelle 21 montiert und an dem Gehäuse 10 befestigt werden. Danach kann der mindestens eine Haltekörper 50 aus der Eingriffsposition bewegt und in dem gezeigten Beispiel von der elektrischen Maschine 1 entfernt werden. Auf gleiche Weise wird mit dem zweiten Drehlager 41 verfahren. Die Öffnungen 56 können mittels geeigneter Abdeckungen verschlossen werden, um das Eindringen von Fremdkörpern in den Innenraum der elektrischen Maschine 1 zu verhindern.

### Bezugszeichenliste

| | | | |
|---|---|---|---|
| 1 | elektrische Maschine / Elektromotor | 31b | Innenring |
| | | 31c | Wälzkörper |
| 2 | Luftspalt | 32 | Lagersitzkörper |
| 3 | Anschlussdose | 33 | erster Lagerhaltekörper |
| 5 | Halteeinrichtung | 33a | erste Wellendichtung |
| 5' | Halteeinrichtung | 34 | zweiter Lagerhaltekörper |
| | | 34a | zweite Wellendichtung |
| 10 | Gehäuse | 35 | Axialsicherungselement |
| 11 | erste Stirnwand | 36 | Befestigungselement / Schraubenbolzen |
| 11a | Zentierfläche | | |
| 12 | zweite Stirnwand | | |
| 12a | Zentierfläche | 40 | zweite Lagereinheit |
| 13 | Umfangswand | 41 | Drehlager |
| 14 | Stator | 41a | Außenring |
| 14a | Wicklungen | 41b | Innenring |
| 15 | Befestigungsflansch | 41c | Wälzkörper |
| 16 | Öse | 42 | Lagersitzkörper |
| | | 43 | erster Lagerhaltekörper |
| 20 | Rotor | 43a | erste Wellendichtung |
| 21 | Rotorwelle | 44 | zweiter Lagerhaltekörper |
| 21a | Dichtfläche | 44a | zweite Wellendichtung |
| 21b | Lagersitzfläche | 45 | Axialsicherungselement |
| 21c | Dichtfläche | 46 | Distanzring |
| 21d | Ringnut | | |
| 22 | Magnetträger | 50 | Haltekörper / Schraubenbolzen |
| 23 | Verbindungssteg | 51 | Eingriffsabschnitt |
| 23a | Schraubenbolzen | 52 | Führungsschaft |
| 24 | Haltefläche / Zentrierfläche | 53 | Mitnahmeprofil |
| 25 | Permanentmagnete | 54 | erster Führungskörper / Buchse |
| | | 55 | zweiter Führungskörper / Buchse |
| 30 | erste Lagereinheit | 56 | Öffnung |
| 31 | Drehlager | | |
| 31a | Außenring | D | Drehachse |

## Patentansprüche

1. Elektrische Maschine (1), die Folgendes umfasst:
- ein Gehäuse (10) und einen Stator (14), und
- einen Rotor (20) mit einer Rotorwelle (21), die über Drehlager (31, 41) um eine Drehachse (D) drehbar an dem Gehäuse (10) gelagert ist,
- wobei zumindest eines der Drehlager (31; 41) lösbar an dem Gehäuse (10) befestigt ist und mit einer Bewegung entlang der Drehachse (D) von dem Gehäuse (10) und der Rotorwelle (21) entfernbar ist,
**gekennzeichnet durch**
- eine Halteeinrichtung (5; 5'), die verhindert, dass der Rotor (20) in Berührung mit dem Stator (14) gerät, wenn das Drehlager (31; 41) von dem Gehäuse (10) entfernt wird oder ist.

2. Elektrische Maschine (1) nach dem vorhergehenden Anspruch, **dadurch gekennzeichnet, dass** die Halteeinrichtung (5) mindestens einen Haltekörper (50) aufweist, welcher aus einer Position, in der er außer Eingriff mit dem Rotor (20) ist, in eine Eingriffsposition bewegbar ist, in der er in einem derartigen Eingriff mit dem Rotor (20) ist, dass er ein Verkippen der Rotorwelle (21) in Bezug auf die Drehachse (D) verhindert.

3. Elektrische Maschine (1) nach dem vorhergehenden Anspruch, **dadurch gekennzeichnet, dass** mehrere Haltekörper (50) über den Umfang des Rotors (20) verteilt angeordnet sind und/oder dass der mindestens eine Haltekörper (50) bolzenförmig, insbesondere ein Schraubenbolzen, ist.

4. Elektrische Maschine (1) nach einem der zwei vorhergehenden Ansprüche, **dadurch gekennzeichnet, dass** der mindestens eine Haltekörper (50) von einer eine Stirnseite des Gehäuses (10) bildenden Stirnwand (11) in das Gehäuse (10) einführbar ist, um ihn in die Eingriffsposition zu bewegen.

5. Elektrische Maschine (1) nach einem der drei vorhergehenden Ansprüche, **dadurch gekennzeichnet, dass** an der Innenseite einer eine Stirnseite bildenden Stirnwand (11) des Gehäuses (10) je Haltekörper (50) mindestens ein Führungskörper (54, 55) angeordnet ist, welcher den Haltekörper (50) führt.

6. Elektrische Maschine (1) nach einem der vorhergehenden Ansprüche, **gekennzeichnet durch** eine Lagereinheit (30), die das Drehlager (31) und einen Lagersitzkörper (32), der das Drehlager (31) an seinem Außenumfang umgibt, umfasst, wobei der Lagersitzkörper (32) mittels mindestens eines lösbaren Befestigungselements (36) an dem Gehäuse (10) befestigt ist und der Lagersitzkörper (32) zusammen mit dem Drehlager (31) als Einheit mit einer Bewegung entlang der Drehachse (D) von dem Gehäuse (10) entfernbar ist.

7. Elektrische Maschine (1) nach dem vorhergehenden Anspruch, **dadurch gekennzeichnet, dass** die Lagereinheit (30) ferner mindestens einen Wellendichtring (33a, 34a), insbesondere Radialwellendichtring, umfasst, der an der Rotorwelle (21) anliegt und einen Innenraum, in dem der Rotor (20) angeordnet ist, gegen die Umgebung der elektrischen Maschine (1) abdichtet.

8. Elektrische Maschine (1) nach einem der vorhergehenden Ansprüche, **dadurch gekennzeichnet, dass** der Rotor (20) eine Vielzahl Permanentmagnete (25) und der Stator (14) eine Vielzahl Wicklungen (14a) aufweisen, wobei die Permanentmagnete (25) stabförmig mit einer Stablängsrichtung sind und mehrere Permanentmagnete (25) in Stablängsrichtung zur Bildung einer Reihe aneinandergereiht sind, wobei mehrere solcher Reihen in Umfangsrichtung des Rotors (20) abwechselnd gepolt angeordnet sind.

9. Elektrische Maschine (1) nach einem der vorhergehenden Ansprüche, **dadurch gekennzeichnet, dass** die elektrische Maschine (1) ein Motor, beispielsweise ein Torque-Motor, insbesondere zur Verwendung als Antrieb einer Pelletieranlage oder Pellets-Presse ist.

10. Verfahren zum Austausch eines Drehlagers (31) einer elektrischen Maschine (1), insbesondere einer elektrischen Maschine (1) nach einem der vorhergehenden Ansprüche, wobei mindestens ein Haltekörper (50) einer Halteeinrichtung (5) in eine Eingriffsposition bewegt wird, in der er in einem derartigen Eingriff mit einem Rotor (20) ist, dass ein Verkippen einer Rotorwelle (21) des Rotors (20) in Bezug auf eine Drehachse (D) verhindert wird, wobei danach ein Drehlager (31), über das die Rotorwelle (21) an einem Gehäuse (10) der elektrischen Maschine (1) gelagert ist, entlang der Drehachse (D) von dem Gehäuse (1) und der Rotorwelle (21) entfernt wird.

11. Verfahren nach dem vorhergehenden Anspruch, wobei nach dem Entfernen des Drehlagers (31) ein anderes Drehlager (31) entlang der Drehachse (D) auf die Rotorwelle (21) und an das Gehäuse (10) montiert wird, wobei danach der mindestens eine Haltekörper (50) aus der Eingriffsposition bewegt wird.

12. Verfahren nach einem der zwei vorhergehenden Ansprüche, wobei der mindestens eine Haltekörper (50) ein Schraubenbolzen ist, der durch Drehung in eine erste Drehrichtung in die Eingriffsposition bewegt wird, und durch Drehung in eine zweite, der ersten Drehrichtung entgegengesetzte Drehrichtung aus der Eingriffsposition bewegt wird.
